# FASCICULE DE BREVET EUROPEEN

(11) **EP 3 371 078 B1**
(45) Date de publication et mention de la délivrance du brevet: **20.04.2022**
(21) Numéro de dépôt: 16798656.1
(22) Date de dépôt: 28.10.2016
(51) Int. Cl.: B65G 47/14

(54) **DISPOSITIF D'INDIVIDUALISATION D'OBJETS EN VRAC DE PETITE TAILLE**
VORRICHTUNG ZUR INDIVIDUALISIERUNG KLEINER LOSER OBJEKTE
DEVICE FOR INDIVIDUALISING SMALL LOOSE OBJECTS

(30) Priorité: 02.11.2015 FR 1560487
(43) Date de publication de la demande: 12.09.2018
(73) Titulaire: Expertise Vision, 74300 Thyez (FR)
(72) Inventeur: BASSY, Emmanuel, 74300 Thyez (FR)
(74) Mandataire: Croonenbroek, Thomas Jakob
(86) Numéro de dépôt international: PCT/EP2016/076140
(87) Numéro de publication internationale: WO 2017/076779

(56) Documents cités:
- EP-A2- 0 952 099
- EP-A2- 1 642 853
- WO-A1-2010/040722
- CN-A- 104 057 459
- US-A- 4 527 326
- US-A- 5 853 078

## Description

La présente invention concerne un dispositif d'individualisation d'objets en vrac de taille millimétrique, une installation d'alimentation d'une machine d'objets de petite taille, notamment millimétrique, et un procédé d'individualisation d'objets en vrac de petite taille.

Dans l'industrie, par exemple mécanique, électronique ou agroalimentaire, on connaît divers systèmes d'alimentation d'objets en vrac qui sont utilisés dans de nombreuses applications.

Parmi ceux-ci, les plus répandus restent à ce jour les systèmes dits « à bols vibrants ».

Dans ces systèmes, le bol possède en son centre une zone de réception d'objets en vrac. Depuis le centre, un tel bol comprend une rampe hélicoïdale permettant par des vibrations/ secousses d'acheminer les pièces une à une hors du bol et de les orienter par des moyens de guidage pour les présenter à une entrée d'une machine d'assemblage par exemple.

Bien que ces bols soient très répandus, ils présentent néanmoins de nombreux inconvénients.

En effet, du fait de la vibration permanente du bol, notamment selon une direction verticale, nécessaire à l'acheminement des objets, ces bols sont une source de bruits très importante lorsque les pièces retombent et difficiles à maîtriser étant donné qu'aussi bien les objets que les bols sont souvent en métal de sorte que l'entrechoquement entre les pièces, et entre les pièces et le bol est inévitable et génère un bruit considérable.

Souvent par ailleurs, une machine d'assemblage doit être alimentée par plusieurs bols vibrants en même temps, d'où une multiplication des sources de bruit.

De plus, un bol vibrant est généralement conçu pour un objet spécifique ce qui engendre un coût de conception important pour garantir le bon acheminement des objets et rend le bol vibrant inopérant pour des objets pour lesquels il n'est pas conçu. Il manque donc de polyvalence.

On connaît des documents JPH0639762 et US 5 853 078 un bol vibrant qui est combiné à un bras robotisé de préhension.

En outre, plus les objets à individualiser sont petits, plus la conception d'un bol vibrant est difficile et plus souvent on constate des dysfonctionnements, comme par exemple une mauvaise orientation des pièces d'où une cadence d'alimentation qui ne peut plus être assurée. De plus, il peut arriver qu'un corps étranger soit parmi les pièces à individualiser, par exemple des copeaux, des débouchures etc, ce qui peut conduire à des coincements du bol vibrant.

Enfin, pour certaines pièces de grande précision ou fragiles, les vibrations et l'entrechoquement des pièces peuvent altérer la qualité des pièces et notamment leur état de surface. Ces solutions ne permettent pas d'individualiser les pièces en évitant les chocs entre les pièces ou avec les parois du bol vibrant.

On connaît aussi du document EP 916 457 une installation avec un bras robotisé avec une membrane vibrante permettant de bouger les pièces déposées sur la surface pour les individualiser. Toutefois, cette solution est lente et ne permet pas l'alimentation à une cadence élevée d'une autre machine étant donné qu'il faut d'abord individualiser au moins une pièce, puis la localiser avec son orientation pour pouvoir la saisir.

On connaît également du document WO 2010/040722 une installation avec un bras robotisé avec un plateau rotatif comprenant un système de vibrations verticales. Cependant, le fonctionnement d'une telle installation est bruyante, notamment à cause de l'entrechoquement des objets à individualiser avec la surface du plateau.

Le document CN 104 057 459 A divulgue un dispositif d'individualisation d'objets en vrac de petite taille, comprenant un plateau de réception d'objets en vrac, le plateau comprenant un bord périphérique de retenue et une surface de réception; un moteur d'entraînement en rotation du plateau de réception autour d'un axe de rotation de celui-ci; une unité de préhension robotisée des objets; une unité de commande du moteur d'entraînement, qui est configurée pour envoyer au moteur d'entraînement un signal d'alimentation résultant d'une commande de rotation pour entraîner le plateau en rotation dans un sens prédéfini afin d'appliquer une force centrifuge aux objets dans le but de les amener en direction du bord périphérique.

La présente invention vise à résoudre au moins partiellement un ou plusieurs des problèmes décrits ci-dessus en proposant un dispositif d'individualisation d'objets en vrac qui soit polyvalent, moins bruyant et rapide qui permette un déplacement contrôlé des objets à individualiser de manière à limiter l'impact d'éventuels chocs entre objets.

A cet effet, l'invention propose un dispositif d'individualisation d'objets en vrac de petite taille, notamment de forme parallélépipédique, comprenant :
- un plateau de réception d'objets en vrac, le plateau comprenant un bord périphérique de retenue et une surface de réception qui est au niveau du bord plus élevée que vers le centre du plateau, la surface de réception étant en pente du bord périphérique vers le centre du plateau,
- un moteur d'entraînement en rotation du plateau de réception autour d'un axe de rotation de celui-ci,
- une unité de préhension robotisée des objets,
caractérisé en ce qu'il comprend une unité de commande du moteur d'entraînement, qui est configurée pour envoyer au moteur d'entraînement un signal d'alimentation résultant d'une superposition d'une part d'une commande de rotation pour entraîner le plateau en rotation dans un sens prédéfini afin d'appliquer une force centrifuge aux objets dans le but de les amener en direction du bord périphérique, et d'autre part d'une commande de mouvements alternatifs composée de phases accélérant et décélérant la rotation du plateau pour diminuer l'adhérence des objets au plateau de réception et pour faciliter leur déplacement contrôlé en direction du bord périphérique.

Le dispositif selon l'invention se distingue en particulier par sa polyvalence et sa fiabilité de fonctionnement. Il ne génère que peu de bruit et est peu encombrant et facile à nettoyer. De plus, on peut facilement enlever toutes les pièces à individualiser en cas de besoin. Du fait de sa structure et de son fonctionnement, on ne peut pas constater de problèmes de coincements avec le dispositif selon l'invention.

De plus, du fait que l'on contrôle la vitesse de rotation, et donc la force centrifuge s'exerçant sur les objets à individualiser dans un mode de réalisation à un niveau inférieur à la force de frottement statique qui s'exerce sur l'objet, mais supérieure ou égale à la force de frottement cinétique, on parvient à contrôler parfaitement le déplacement des objets sur le plateau de réception et on diminue considérablement la vitesse avec laquelle deux objets peuvent s'entrechoquer ou la vitesse à laquelle un objet heurte un bord périphérique par exemple.

L'invention peut présenter une ou plusieurs des caractéristiques suivantes prises seules ou en combinaison :
Selon un aspect, la commande superposée de mouvements alternatifs est telle que le plateau de réception tourne au moins en fin de la phase de décélération dans le sens inverse du sens prédéfini du mouvement de rotation.
Le signal d'alimentation envoyé au moteur d'entraînement pour entraîner le plateau en rotation dans un sens prédéfini entraîne le plateau de réception par exemple à une vitesse de manière que la force centrifuge appliquée à un objet près du bord extérieur est inférieure à la force statique d'adhésion de l'objet sur le plateau de réception.
Selon un autre aspect, le plateau de réception présente une surface de réception lisse ou une structuration d'orientation des objets.
La structuration d'orientation de la surface de réception peut comprendre des nervures radiales.
Selon un mode de réalisation, les nervures radiales présentent toutes le même profil de hauteur de crête.
Selon un autre mode de réalisation, la surface de réception présente de façon régulière des nervures radiales principales et des nervures radiales secondaires prises entre deux nervures radiales principales, les nervures radiales principales présentant au niveau du bord une hauteur de crête plus importante que les nervures radiales secondaires.
On peut prévoir que deux nervures radiales secondaires sont prises entre deux nervures radiales principales.
Les nervures présentent par exemple un profil triangulaire en section transversale.
L'invention concerne également une installation d'alimentation d'une machine en objets de petite taille, caractérisé en ce qu'elle comprend un dispositif tel que défini ci-dessus.

L'invention concerne en outre un procédé d'individualisation d'objets en vrac de petite taille au moyen d'un dispositif tel que défini ci-dessus, comprenant les étapes suivantes :
- on dépose les objets de taille millimétrique en vrac sur le plateau,
- on entraîne le plateau en rotation dans un sens prédéfini afin d'appliquer une force centrifuge aux objets dans le but de les amener en direction du bord périphérique et on superpose à ce mouvement de rotation des mouvements alternatifs composé de phases accélérant et décélérant la rotation du plateau pour diminuer l'adhérence des objets au plateau de réception et pour faciliter leur déplacement contrôlé en direction du bord périphérique,
- on arrête le mouvement du plateau de réception,
- on détecte la position des objets à l'aide d'une caméra,
- on amène les objets sous l'unité de préhension en faisant tourner le plateau,
- on saisit les objets au moyen de l'unité de préhension robotisée.

Selon un aspect, on applique une vitesse de rotation au plateau de réception de manière que la force centrifuge sur un objet soit inférieure à la force de frottement statique.
Selon un autre aspect, on applique une vitesse de rotation au plateau de réception de manière que la force centrifuge sur un objet soit supérieure à la force de frottement cinétique.
Les mouvements alternatifs superposés peuvent être tels que le plateau de réception tourne au moins en fin de la phase de décélération dans le sens inverse du sens prédéfini du mouvement de rotation.

D'autres caractéristiques et avantages de l'invention ressortiront de la description suivante, donnée à titre d'exemple, sans caractère limitatif, au regard des dessins annexés sur lesquels :
- la figure 1 montre un schéma de principe en perspective d'un dispositif d'individualisation d'objets en vrac,
- la figure 2 est une vue de côté du dispositif de la figure 1,
- la figure 3 est une vue de dessus du dispositif de la figure 1,
- la figure 4 montre un premier exemple d'un graphe montrant en fonction du temps un signal de commande envoyé au variateur du moteur d'entraînement,
- la figure 5 montre un second exemple d'un graphe montrant en fonction du temps un signal de commande envoyé au variateur du moteur d'entraînement,
- la figure 6 est une vue en perspective d'un plateau de réception en vrac d'objets selon un second mode de réalisation,
- la figure 7 est une vue partielle en coupe transversale des nervures du plateau de la figure 4,
- la figure 8A est une vue en perspective d'un plateau de réception en vrac d'objets selon un second mode de réalisation,
- la figure 8B est une vue partielle en coupe transversale des nervures du plateau de la figure 8A,

Sur ces figures, les éléments identiques portent les mêmes numéros de référence.

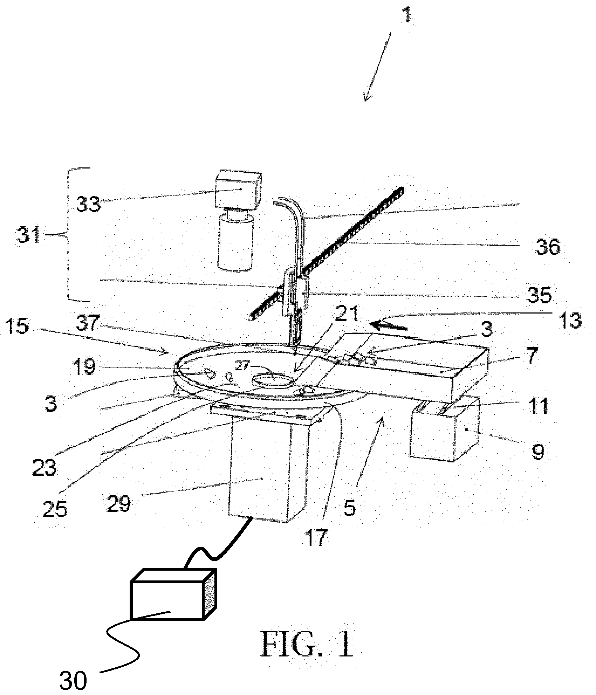

Les figures 1 à 3 montrent un dispositif 1 d'individualisation d'objets 3 en vrac de taille millimétrique.

Ainsi, le dispositif 1 est destiné à recevoir des pièces ou objets 3 en vrac, de forme et de poids sensiblement identiques pour un même lot et à fournir ces objets 3 un par un, notamment positionné et orientés de la même façon à une machine industrielle (non représentée) par exemple de montage ou encore de contrôle un à un des objets 3.

Ainsi, le dispositif 1 fait par exemple partie d'une installation d'alimentation d'une machine en objets de taille millimétriques.

Les objets 3 sont de petite taille, notamment millimétriques, c'est-à-dire ils mesurent généralement de 1mm environ à 100mm voire jusqu'à 300mm pour leur extension la plus longue.

Les objets 3 peuvent être en métal ou en plastique ou en bois, par exemple des pièces produites par usinage, par découpage, par injection ou en frappe. Ils peuvent être des produits semi-finis ou des composants (connecteurs, composants électroniques, pièce mécanique).

Ils possèdent notamment au moins une symétrie principale : axe de symétrie ou un plan de symétrie ou un centre de symétrie, ou encore en particulier un plan d'appui.

Sans restreindre le type d'objets 3 qui peuvent être individualisés par le dispositif 1 selon l'invention, on peut citer des objets de forme parallélépipédiques, cylindriques (par exemple des tiges), des objets cylindriques cubiques dont le rapport longueur / diamètre est proche de l'unité.

De façon optionnelle, le dispositif 1 comprend une unité de stockage, comme par exemple une trémie 5 de stockage d'objets 3. Cette trémie 5 se compose par exemple d'une cuve 7 de remplissage recevant des objets 3 et d'un vibreur 9 relié par des lames 11 à la cuve 7 de façon à faire avancer les objets 3 vers une sortie (voir flèche 13).

En sortie de la cuve 7, les objets 3 tombent en vrac sur un plateau 15 de réception d'objets en vrac.

Comme on le voit sur les figures, le plateau 15 comprend un bord périphérique 17 de retenu et une surface de réception 19 des objets.

Au niveau du bord périphérique 17, la surface de réception 19 est à un niveau plus élevé que vers le centre 21 du plateau 15. Il en résulte, vue en coupe transversale, une forme généralement conique du plateau 3 surmonté par le bord périphérique 17. Le plateau 15 de réception possède donc une forme générale d'un disque conique.

Sur l'exemple de réalisation des figures 1 à 3, la surface de réception 19 du plateau 15 est lisse de sorte que les objets peuvent glisser sur la surface de réception 19. Par « lisse », on entend ici que les aspérités de la surface de réception 19 sont petites devant les dimensions de l'objet 3, par exemple inférieures de l'ordre micrométrique, c'est-à-dire inférieures à 50µm, voir 10µm.

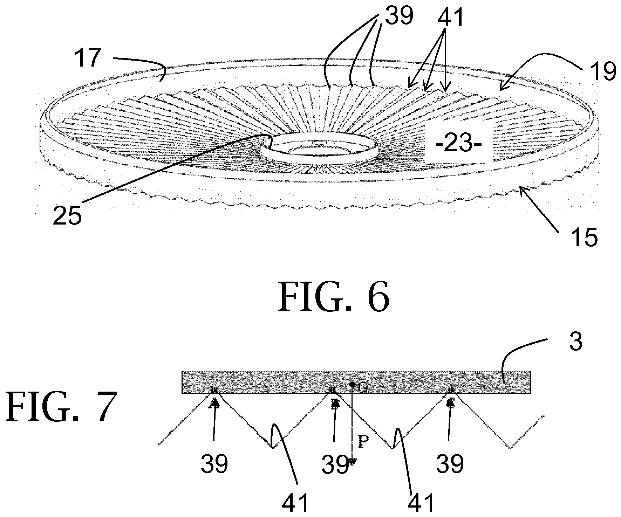

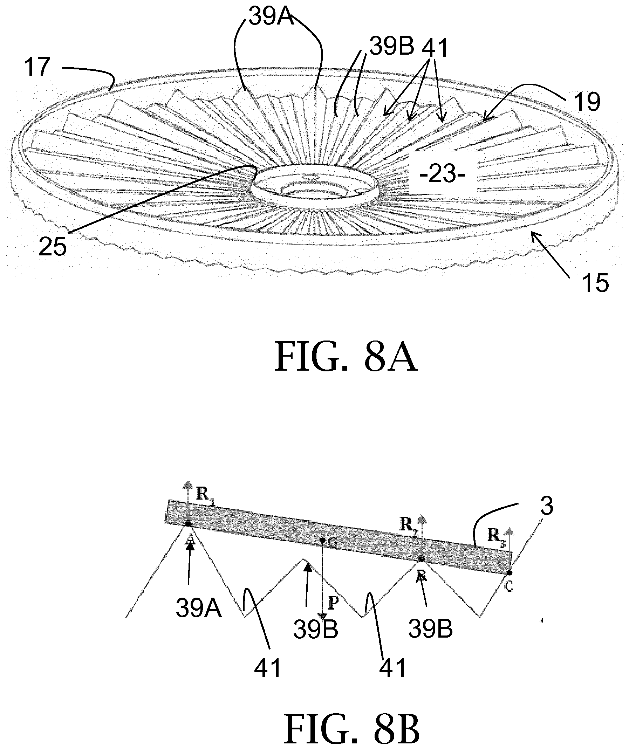

Selon d'autres modes de réalisation, la surface de réception 19 présente une structuration 23 d'orientation des objets qui sera détaillée plus loin en rapport avec les figures 6 à 8A, 8B.

De plus, le plateau 15 comprend un bord circulaire interne 25 délimitant une zone centrale 27 destinée à la fixation du plateau 15 à un axe de sortie d'un moteur d'entraînement 29 et ne recevant pas d'objets 3.

Le moteur d'entraînement 29 du plateau 15 est conçu et a pour fonction d'entraîner le plateau 15 en rotation dans le plan x-y, c'est-à-dire autour de l'axe de rotation du plateau 15 circulaire. Le moteur 29 est piloté par une unité de commande 30. L'unité de commande est par exemple un variateur numérique. Le moteur d'entraînement est par exemple un moteur électrique AC synchrone. Pour le pilotage, l'unité de commande 30 est par exemple programmé par une consigne de vitesse.

Enfin, le dispositif 3 comprend une unité 31 de préhension robotisée des objets 3. Celle-ci se compose par exemple d'une caméra 33 et d'un bras robotisé linéaire 35, disposé par exemple sur un rail 36, pouvant se déplacer d'une part le long d'un rayon du plateau 15 et d'autre part perpendiculairement au plateau, selon l'axe « z », pour prendre les objets 3.

Selon une forme de réalisation, le bras 35 comporte à son extrémité un préhenseur 37, par exemple sous forme d'une pipette aspirante. Pour prendre les objets 3, la pipette peut par exemple avoir une forme en « V » avec un trou aspirant dans le fond du « V » ou par exemple une autre forme complémentaire à celle des objets 3 à saisir avec un ou plusieurs trous d'aspiration.

Selon d'autres variantes, le préhenseur 37 peut présenter une pince, un aimant (pour des objets ferromagnétiques), mais une préhension par des principes de capillarité ou par l'électricité statique sont également envisageables.

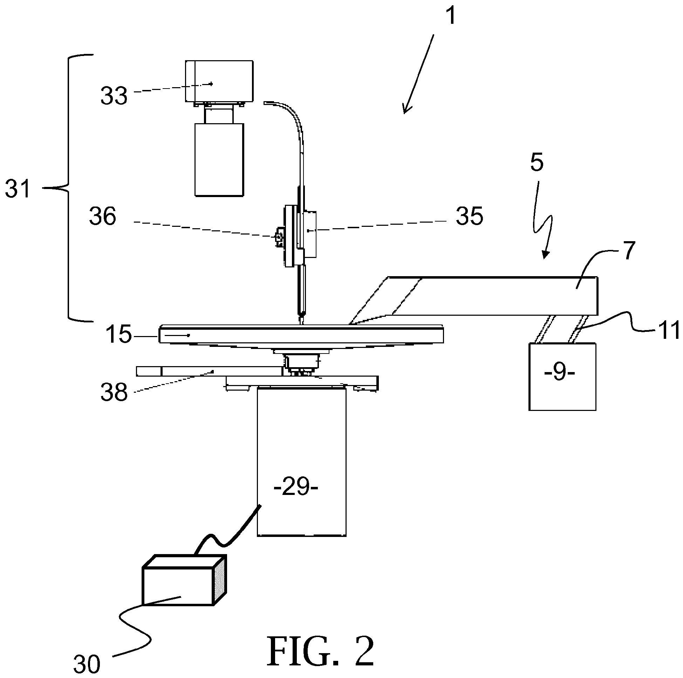

Par ailleurs, on prévoit dans un mode préférentiel que le plateau 15 est réalisé en une matière translucide ou transparente et qu'un rétroéclairage 38 (voir figure 2) est disposé sous le plateau 15 pour faciliter la détection des objets 3 par la caméra 33.

Pour déplacer les objets de façon contrôlée et limiter ainsi des chocs trop importants sur les objets ou entre les objets, on part du principe physique bien connu que la force de frottement statique d'un objet est plus importante que la force de frottement dynamique ou cinématique.

En effet, lorsqu'un objet est au repos sur le plateau de réception 15 et on souhaite le déplacer vers le bord périphérique 17, il faut vaincre la force de frottement statique.

Si on applique donc simplement une force centrifuge aux objets 3 en faisant tourner plateau 15 à une vitesse angulaire, tant que cette force centrifuge n'est pas supérieure à la force de frottement statique, la pièce reste au repos. Par contre, si la force centrifuge devient supérieure à la force de frottement statique, l'objet commence à se déplacer et même à accélérer de façon difficilement contrôlable du fait que la force de frottement statique est remplacée par la force de frottement cinématique qui est inférieure à la force de frottement statique.

En revanche, si on applique une force centrifuge à l'objet 3 qui est inférieure à la force de frottement statique, par application d'un mouvement de rotation du plateau de réception 15, et si on superpose à ce mouvement de rotation des mouvements alternatifs composés de phases accélérant et décélérant la rotation du plateau pour diminuer l'adhérence des objets 3 au plateau de réception 15 de sorte qu'ils se trouvent dans un mode de glissement lors duquel la force de frottement cinématique a remplacé la force de frottement statique, on parvient à contrôler de façon précise le déplacement des objets 3 en direction du bord périphérique 17. En effet, la force centrifuge nécessaire à la mise en mouvement de la pièce est proportionnelle au coefficient de frottement. En diminuant ce dernier on diminue la vitesse radiale de l'objet dans les mêmes proportions (à rayon constant).

Si la pente du plateau de réception 15 est de plus choisie de manière à ce que la composante de la force gravitationnelle tirant l'objet 3 en direction vers le centre 21 du plateau 15, est plus importante que la force de frottement cinématique, mais inférieure à la force de frottement statique, on peut, en appliquant des mouvements en rotation alternatifs de va et vient (vibration) placer l'objet dans un mode de glissement, pour permettre un déplacement contrôlé des objets 3 en direction du centre 21.

On comprend donc que l'on peut ainsi contrôler de façon très précise le déplacement radial des objets 3.

Pour cette raison, le dispositif 1 d'individualisation d'objets 3 comprend une unité de commande 30 pour envoyer au moteur d'entraînement 29 un signal d'alimentation, par exemple un courant d'alimentation. L'unité de commande 30 est configurée pour superposer à une commande pour entraîner le plateau en rotation dans un sens prédéfini afin d'appliquer une force centrifuge aux objets dans le but de les amener en direction du bord périphérique, une commande de mouvements alternatifs composé de phases accélérant et décélérant la rotation du plateau pour diminuer l'adhérence des objets au plateau de réception et pour faciliter leur déplacement radial contrôlé en direction du bord périphérique.

Bien entendu, pour une configuration donnée, un certain nombre de paramètres doivent être pris en compte pour calibrer par exemple la vitesse de rotation à appliquer, notamment le poids de l'objet, ses coefficients statiques et cinématiques ainsi que la pente du plateau de réception 15 et la position radiale de l'objet 3 sur le plateau.

Il s'est avéré par contre que l'amplitude ou la fréquence des mouvements alternatifs qui sont des mouvements angulaires de va et vient autour de l'axe de rotation du plateau 15, n'a pas d'influence sur le déplacement radial des objets 3. Il est seulement important que ces mouvements alternatifs placent l'objet 3 dans un mode de glissement pour s'affranchir des forces de frottement statiques.

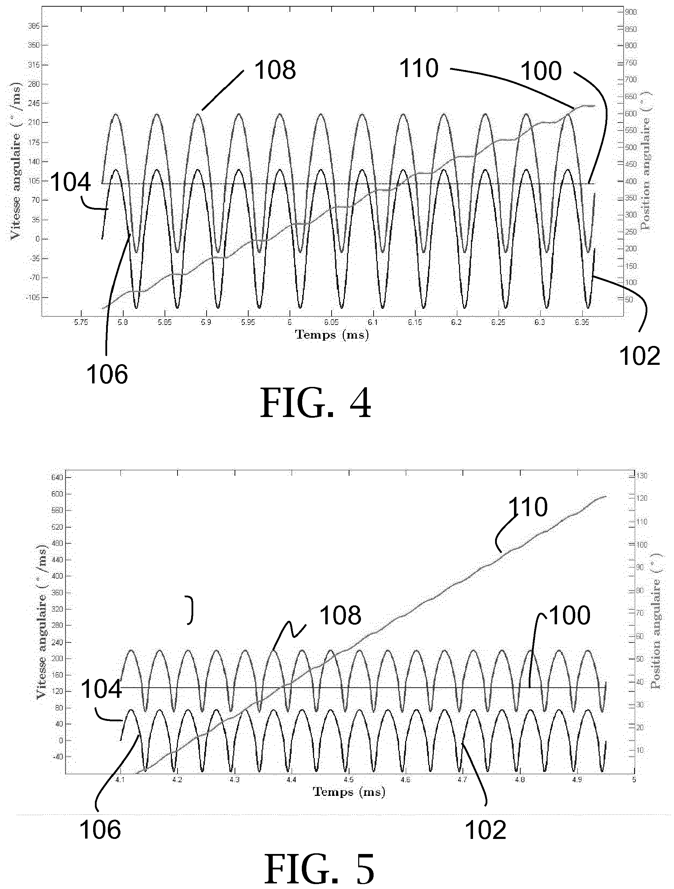

La figure 4 montre un exemple d'une commande de vitesse en fonction du temps.

La courbe 100 montre le signal de consigne d'un mouvement de rotation du plateau de réception 15. Il s'agit d'une vitesse de rotation ω constante et elle est choisie, comme expliqué ci-dessus, de manière que la force centrifuge agissant sur l'objet 3 est inférieure à la force de frottement statique entre le plateau 15 et l'objet 3. On comprend donc que si on applique seulement un mouvement de rotation au plateau 15 à la vitesse ω, l'objet 3 reste immobile sur le plateau de réception 15. La courbe 100 est la composante continue de la commande de vitesse.

A ce mouvement, on superpose une commande 102 de mouvements alternatifs composé de phases accélérant 104 et décélérant 106 la rotation du plateau de réception 15. Il s'agit dans le présent cas d'un signal de forme générale sinusoïdale qui est symétrique. Si on appliquait seulement cette commande de mouvements alternatifs, et si le plateau de réception 15 était plan (non incliné ou conique vers le centre), l'objet 3 resterait également en moyenne immobile sur place, et notamment immobile dans le sens radial. Toutefois, ce signal a pour conséquence de soustraire l'objet 3 à la force de frottement statique. La courbe 102 est la composante alternative du signal de commande de vitesse.

En variante, ce signal peut aussi être dissymétrique, c'est-à-dire par exemple que la phase l'accélération sera plus forte que la phase de décélération. Dans ce cas, en appliquant seulement le signal de commande de mouvements alternatifs, on arrive à déplacer l'objet 3 sur le plateau de réception 15 (dans le cas d'un plateau lisse) dans le sens angulaire en prenant le plateau 15 comme repère fixe, mais pas dans le sens radial.

En superposant les commandes 100 (composante continue) et 102 (composante alternative), on obtient la résultante 108 appliquée comme signal d'alimentation au moteur d'entraînement 29 par l'unité de commande 30. Les mouvements alternatifs composés de phases accélérant et décélérant la rotation du plateau de réception 15 ont pour conséquence de placer l'objet 3 dans un mode de glissement diminuant l'adhérence des objets 3 au plateau de réception et facilitant leur déplacement radial contrôlé en direction du bord périphérique 17.

La courbe 110 montre la position angulaire du plateau de réception 15 qui résulte de l'application de ce signal d'alimentation résultant de la superposition décrite ci-dessus.

Ainsi, le déplacement des objets 3 peut être maîtrisé avec une grande précision et on peut ainsi éviter des chocs entre objets 3 ou contre le bord périphérique 17.

La figure 5 est une figure similaire à la figure 4 et montre un autre exemple d'un signal d'alimentation en fonction du temps qui se distingue essentiellement par le fait que les mouvements alternatifs sont moins importants et que le plateau de réception 15 avance même dans les phases de décélération, en particulier à la fin, mais avec une vitesse angulaire plus réduite.

Les exemples ci-dessus ont été donnés pour un plateau de réception 15 lisse et des objets 3 par exemple sous forme de parallélépipèdes. Bien entendu, des objets 3 ayant une forme différente ou des plateaux ayant par exemple une structuration d'orientation des objets 3 peuvent être utilisés sans sortir du cadre de la présente invention. Par ailleurs, le choix de matériau du plateau ou du revêtement de la surface de réception 19 permet d'optimiser le fonctionnement de l'installation 1 selon l'invention.

Pour protéger les objets 3 fragiles par exemple, on peut choisir un plateau 15 avec une surface de réception 19 ayant un coefficient de frottement adapté pour des objets 3 métalliques afin de réduire la force centrifuge nécessaire à leurs déplacements, donc leurs vitesses, donc les chocs éventuels entre objets, et entre objets et plateau.

De façon générale, pour déterminer la vitesse de rotation ω il suffit de placer un objet 3 sur la surface de réception 19 du plateau 15 et de constater à partir de quelle vitesse angulaire ωₘₐₓ l'objet 3 commence à se déplacer. Pour le fonctionnement selon l'invention, on choisira donc une vitesse ω inférieure à ωₘₐₓ. Puis on superpose une commande de mouvements alternatifs à la commande de la vitesse de rotation choisie. Si l'objet 3 se déplace radialement, dans ce cas l'objectif d'un déplacement contrôlé des objets 3 est atteint. Si l'objet 3 reste immobile, dans ce cas la force centrifuge est inférieure à la force de frottement cinématique de l'objet 3 et le cas échéant de la composante de la force gravitationnelle agissant sur l'objet du fait de la pente du plateau 15 et on doit augmenter la vitesse de rotation ω tout en restant inférieure à ωₘₐₓ

Une fois que ces paramètres ont été déterminés, on peut procéder à l'individualisation des objets 3 en vrac de petite taille au moyen d'un dispositif selon l'invention 1 tel que décrit ci-dessus.

C'est-à-dire, on dépose les objets 3 de taille millimétrique en vrac sur le plateau 15, et puis on entraîne le plateau 15 en rotation dans un sens prédéfini afin d'appliquer une force centrifuge aux objets 3 dans le but de les amener en direction du bord périphérique et on superpose à ce mouvement de rotation des mouvements alternatifs composé de phases accélérant et décélérant la rotation du plateau 15 pour diminuer l'adhérence des objets 3 au plateau de réception et pour faciliter leur déplacement contrôlé en direction du bord périphérique 17.

Dès que les objets 3 ou suffisamment d'objets 3, sont bien placés sur le plateau, on arrête le mouvement du plateau de réception 15. Puis on détecte la position des objets 3 à l'aide de la caméra 33 et on amène les objets 3 sous l'unité de préhension robotisée 31 en faisant tourner le plateau 15. Enfin, on saisit un à un les objets 3 au moyen de l'unité de préhension robotisée 31.

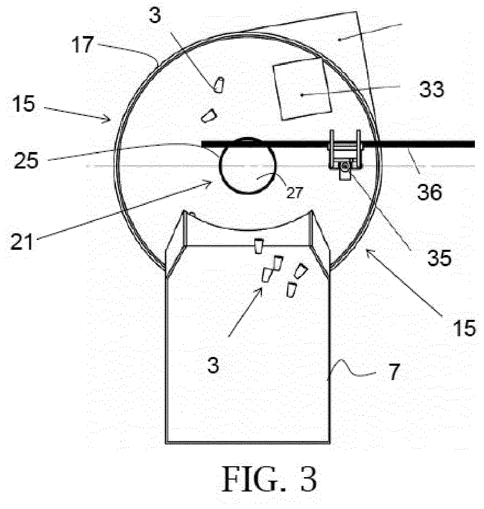

Comme on le voit sur la figure 3, on préfère que la zone de préhension des objets 3 se trouve près du bord périphérique 17.

Bien entendu, par l'intermédiaire de la caméra 33, on détermine lesquels des objets 3 sont correctement placés pour être saisis et pour les délivrer par exemple à une machine de montage.

Pour un déplacement contrôlé des objets, on choisit une vitesse de rotation du plateau de réception 15 de manière que la force centrifuge sur un objet 3 soit inférieure à la force de frottement statique mais supérieure à la force de frottement cinétique.

Selon un mode de réalisation, les mouvements alternatifs superposés sont tels que le plateau de réception 15 tourne, au moins en fin de la phase de décélération 106, dans le sens inverse du sens prédéfini du mouvement de rotation.

On décrira maintenant en détail d'autres exemples de réalisation de plateaux 15 de réception des objets 3 en relation avec les figures 6 à 15. Les principes de l'invention telles que décrites ci-dessus restent applicables de façon similaire.

Comme on le voit sur la figure 6, du fait de sa forme générale conique, la surface de réception 19 est en pente du bord périphérique 17 vers le centre 21 du plateau 15.

Selon le premier mode de réalisation sur les figures 6 et 7 qui est en particulier adapté aux objets cylindriques, légèrement coniques, la structuration d'orientation 23 de la surface de réception 19 comprend des nervures radiales 39 ayant une section transversale triangulaire (voir figure 7). C'est dans le creux, les sillons 41, entre deux nervures 39 que doivent se positionner les objets 3 pour être orientés de façon convenable pour être saisis par le préhenseur 37. Selon une variante non représentée, le fond des sillons 41 peut être semi-circulaire.

Selon l'exemple de la figure 6, les nervures radiales 39 présentent toutes le même profil de hauteur de crête. Comme on voit sur la figure 6, cette hauteur de crête est maximale au niveau du bord périphérique 17 et diminue progressivement en direction du centre 21 du plateau 15, autrement dit, la hauteur de crête est la même à équidistance du centre du plateau 15 et diminue en se rapprochant du centre 21. Le fait que la hauteur de crête au niveau du centre est plus faible favorise l'étalement et le déplacement des objets vers le bord périphérique 17 par centrifugation.

Cette conception du plateau 15 découle du moins en partie des considérations suivantes.

La hauteur des nervures 39 (donc la structuration 23) et la profondeur des sillons 41 doivent être choisies de telle manière qu'une animation en rotation avec des mouvements alternatifs superposés comme décrite ci-dessus permet
1) d'étaler les objets 3 et de les séparer les uns des autres,
2) de les déplacer radialement c'est-à-dire de les faire remonter la pente à l'encontre de la force gravitationnelle en direction du bord périphérique 17, et
3) de placer et orienter les objets 3 dans les sillons 41, notamment proche du bord périphérique 17, entre deux nervures radiales 39 afin que les objets se trouvent dans une position stable d'orientation pré-définie.

La structuration 23 du plateau 15 permet donc de bloquer au repos les objets 3 proches du bord périphérique 17 dans une position stable.

Les objets 3, en fonction de leur forme et de leur orientation sur le plateau 15 peuvent donc glisser ou rouler par-dessus les nervures radiales 39 avant de se placer dans les sillons 41.

Comme sur l'exemple de la figure 3, on préfère pour ce plateau de réception 15 que la zone de préhension des objets 3 se trouve près du bord périphérique 17 où la hauteur des nervures radiales 39 est la plus importante et la position des objets 3 dans les sillons 41 la plus stable.

Bien entendu, par l'intermédiaire de la caméra 33, on détermine lesquels des objets 3 sont correctement placés dans les sillons 41 et seuls les coordonnées des objets 3 correctement placés sont envoyées au bras robotisé 35 pour saisir les objets 3 et les délivrer par exemple à une machine de montage.

Les figures 8A et 8B montrent un autre mode de réalisation d'un plateau de réception 15.

Ce mode de réalisation se distingue de celui des figures précédentes par le fait que la surface de réception 19 présente comme structuration 23 de façon régulière des nervures radiales principales 39A et des nervures radiales secondaires 39B prises entre deux nervures radiales principales 39A. Les nervures radiales principales 39A présentent au niveau du bord périphérique 17 une hauteur de crête plus importante que les nervures radiales secondaires 39B.

Plus précisément sur la figure 8A, deux nervures radiales secondaires 39B sont prises entre deux nervures radiales principales 39A.

Cette structuration d'orientation 23 a pour conséquence que tous les objets 3 qui ne se trouvent pas orientés dans un sillon 41 sont en déséquilibre de sorte qu'un mouvement de rotation superposé avec un mouvement alternatif d'accélération et de décélération permet de faire bouger les objets 3 pour les placer correctement dans les sillons 41.

Bien entendu, on peut aussi avoir plus de nervures secondaires 39B prises entre deux nervures principales 39A ; le nombre de nervures secondaires 39B pris entre deux nervures principales 39A dépend essentiellement de la longueur des objets 3 afin que ceux-ci soient pratiquement toujours en déséquilibre sauf lorsqu'ils sont placés dans les sillons 41.

Par ailleurs, on note qu'en direction du centre 21, la hauteur de crête, aussi bien des nervures principales 39A que des nervures secondaires 39B, diminue à proximité du centre 21 comme en référence à la figure 6.

Le fonctionnement du dispositif 1 avec ce type de plateau 15 est similaire à celui décrit précédemment.

On comprend donc que le dispositif selon l'invention est peu onéreux, fiable, polyvalent et peu bruyant de sorte qu'il convient parfaitement à individualiser des objets 3 de petite taille par exemple pour alimenter une machine de montage ou une machine d'inspection des objets 3.

De plus, il permet de contrôler de façon précise le déplacement des objets 3 de façon à éviter des chocs trop important pouvant endommager les objets.

## Revendications

1. Dispositif (1) d'individualisation d'objets (3) en vrac de petite taille, notamment de forme parallélépipédique, comprenant :
- un plateau (15) de réception d'objets (3) en vrac, le plateau (15) comprenant un bord périphérique (17) de retenue et une surface de réception (19) qui est au niveau du bord plus élevée que vers le centre (21) du plateau (15), la surface de réception (19) étant en pente du bord périphérique (17) vers le centre (21) du plateau (15),
- un moteur d'entraînement en rotation (29) du plateau de réception (15) autour d'un axe de rotation de celui-ci,
- une unité (31) de préhension robotisée des objets (3),
- une unité de commande (30) du moteur d'entraînement (29), qui est configurée pour envoyer au moteur d'entraînement (29) un signal d'alimentation résultant d'une superposition d'une part d'une commande de rotation pour entraîner le plateau (15) en rotation dans un sens prédéfini afin d'appliquer une force centrifuge aux objets (3) dans le but de les amener en direction du bord périphérique, et d'autre part d'une commande de mouvements alternatifs composée de phases accélérant (104) et décélérant (106) la rotation du plateau (15) pour diminuer l'adhérence des objets (3) au plateau de réception (15) et pour faciliter leur déplacement contrôlé en direction du bord périphérique (17).

2. Dispositif selon la revendication 1, **caractérisé en ce que** la commande superposée de mouvements alternatifs est telle que le plateau de réception (17) tourne au moins en fin de la phase de décélération dans le sens inverse du sens prédéfini du mouvement de rotation.

3. Dispositif selon la revendication 1 ou 2, **caractérisé en ce que** le signal d'alimentation envoyé au moteur d'entraînement (29) pour entraîner le plateau en rotation dans un sens prédéfini entraîne le plateau de réception (15) à une vitesse de manière que la force centrifuge appliquée à un objet près du bord extérieur est inférieure à la force statique d'adhésion de l'objet (3) sur le plateau de réception (15).

4. Dispositif selon l'une quelconque des revendications 1 à 3, **caractérisé en ce que** le plateau de réception (15) présente une surface de réception (19) lisse.

5. Dispositif selon l'une quelconque des revendications 1 à 3, **caractérisé en ce que** le plateau de réception (15) présente une surface de réception (19) présentant une structuration (23) d'orientation des objets (3).

6. Dispositif selon la revendication 5, **caractérisé en ce que** la structuration d'orientation (23) de la surface de réception (19) comprend des nervures radiales (39, 39A, 39B).

7. Dispositif selon la revendication 6, **caractérisé en ce que** les nervures radiales (39) présentent toutes le même profil de hauteur de crête.

8. Dispositif selon la revendication 6, **caractérisé en ce que** la surface de réception présente de façon régulière des nervures radiales principales (39A) et des nervures radiales secondaires (39B) prises entre deux nervures radiales principales (39A), les nervures radiales principales (39A) présentant au niveau du bord (17) une hauteur de crête plus importante que les nervures radiales secondaires (39B).

9. Dispositif selon la revendication 8, **caractérisé en ce que** deux nervures radiales secondaires (39B) sont prises entre deux nervures radiales principales (39A).

10. Dispositif selon l'une quelconque des revendications 6 à 9, **caractérisé en ce que** les nervures (39, 39A, 39B) présentent un profil triangulaire en section transversale.

11. Installation d'alimentation d'une machine en objets de petite taille, **caractérisé en ce qu'**elle comprend un dispositif (1) selon l'une quelconque des revendications 1 à 10.

12. Procédé d'individualisation d'objets en vrac de petite taille au moyen d'un dispositif (1) selon l'une quelconque des revendications 1 à 10, comprenant les étapes suivantes :
- on dépose les objets (3) de taille millimétrique en vrac sur le plateau (15),
- on entraîne le plateau (15) en rotation dans un sens prédéfini afin d'appliquer une force centrifuge aux objets (3) dans le but de les amener en direction du bord périphérique et on superpose à ce mouvement de rotation des mouvements alternatifs composé de phases accélérant (104) et décélérant (106) la rotation du plateau (15) pour diminuer l'adhérence des objets au plateau de réception et pour faciliter leur déplacement contrôlé en direction du bord périphérique (17),
- on arrête le mouvement du plateau de réception (15),
- on détecte la position des objets (3) à l'aide d'une caméra (33),
- on amène les objets (3) sous l'unité de préhension en faisant tourner le plateau (15),
- on saisit les objets (3) au moyen de l'unité de préhension robotisée (31).

13. Procédé d'individualisation d'objets en vrac selon la revendication 12, **caractérisé en ce que** l'on applique une vitesse de rotation au plateau de réception de manière que la force centrifuge sur un objet (3) soit inférieure à la force de frottement statique.

14. Procédé d'individualisation d'objets en vrac selon la revendication 13, **caractérisé en ce que** l'on applique une vitesse de rotation au plateau de réception (15) de manière que la force centrifuge sur un objet soit supérieure à la force de frottement cinétique.

15. Procédé d'individualisation d'objets en vrac selon l'une quelconque des revendications 12 à 14, caractérisé en ce les mouvements alternatifs superposés sont tels que le plateau de réception (15) tourne au moins en fin de la phase de décélération dans le sens inverse du sens prédéfini du mouvement de rotation.

## Patentansprüche

1. Vorrichtung (1) zur Individualisierung kleiner loser Objekte (3), insbesondere mit Parallelepipedform, die Folgendes beinhaltet:
- eine Platte (15) zur Aufnahme loser Objekte (3), wobei die Platte (15) einen umlaufenden Rückhalterand (17) und eine Aufnahmefläche (19) umfasst, die am Rand höher als zur Mitte (21) der Platte (15) hin ist, sodass die Aufnahmefläche (19) von dem umlaufenden Rand (17) zur Mitte (21) der Platte (15) hin geneigt ist,
- einen Antriebsmotor (29) zum Drehen der Aufnahmeplatte (15) um eine Drehachse derselben,
- eine robotisierte Einheit (31) zum Greifen der Objekte (3),
- eine Steuereinheit (30) des Antriebsmotors (29), die dazu konfiguriert ist, ein Versorgungssignal an den Antriebsmotor (29) zu schicken, das sich aus einer Überlagerung von Folgendem ergibt: einerseits eines Drehbefehls, um die Platte (15) in einer vordefinierten Richtung in Drehung zu versetzen, um eine Zentrifugalkraft auf die Objekte (3) auszuüben, mit dem Ziel, sie in Richtung des umlaufenden Rands zu führen, und andererseits eines Befehls für Hin- und Herbewegungen, der aus Phasen besteht, die die Drehung der Platte (15) beschleunigen (104) und verlangsamen (106), um die Haftung der Objekte (3) an der Aufnahmeplatte (15) zu verringern und ihre kontrollierte Bewegung in Richtung des umlaufenden Rands (17) zu erleichtern.

2. Vorrichtung nach Anspruch 1, **dadurch gekennzeichnet, dass** der überlagerte Befehl für Hin- und Herbewegungen derart ist, dass sich die Aufnahmeplatte (17) zumindest am Ende der Verlangsamungsphase in der Richtung bewegt, die der vordefinierten Richtung der Drehbewegung entgegengesetzt ist.

3. Vorrichtung nach Anspruch 1 oder 2, **dadurch gekennzeichnet, dass** das an den Antriebsmotor (29) geschickte Versorgungssignal, um die Platte in einer vordefinierten Richtung in Drehung zu versetzen, die Aufnahmeplatte (15) mit einer Geschwindigkeit antreibt, sodass die auf ein Objekt in der Nähe des Außenrands ausgeübte Zentrifugalkraft kleiner als die statische Adhäsionskraft des Objekts (3) auf der Aufnahmeplatte (15) ist.

4. Vorrichtung nach einem der Ansprüche 1 bis 3, **dadurch gekennzeichnet, dass** die Aufnahmeplatte (15) eine glatte Aufnahmefläche (19) aufweist.

5. Vorrichtung nach einem der Ansprüche 1 bis 3, **dadurch gekennzeichnet, dass** die Aufnahmeplatte (15) eine Aufnahmefläche (19) aufweist, die eine Strukturierung (23) zur Ausrichtung der Objekte (3) aufweist.

6. Vorrichtung nach Anspruch 5, **dadurch gekennzeichnet, dass** die Ausrichtungsstrukturierung (23) der Aufnahmefläche (19) radiale Rippen (39, 39A, 39B) beinhaltet.

7. Vorrichtung nach Anspruch 6, **dadurch gekennzeichnet, dass** die radialen Rippen (39) alle dasselbe Kammhöhenprofil aufweisen.

8. Vorrichtung nach Anspruch 6, **dadurch gekennzeichnet, dass** die Aufnahmefläche auf regelmäßige Weise radiale Hauptrippen (39A) und, zwischen zwei radialen Hauptrippen (39A), radiale Sekundärrippen (39B) aufweist, wobei die radialen Hauptrippen (39A) am Rand (17) eine größere Kammhöhe aufweisen als die radialen Sekundärrippen (39B).

9. Vorrichtung nach Anspruch 8, **dadurch gekennzeichnet, dass** zwei radiale Sekundärrippen (39B) zwischen zwei radialen Hauptrippen (39A) liegen.

10. Vorrichtung nach einem der Ansprüche 6 bis 9, **dadurch gekennzeichnet, dass** die Rippen (39, 39A, 39B) im Querschnitt ein dreieckiges Profil aufweisen.

11. Anlage zur Versorgung einer Maschine mit kleinen Objekten, **dadurch gekennzeichnet, dass** sie eine Vorrichtung (1) nach einem der Ansprüche 1 bis 10 beinhaltet.

12. Verfahren zur Individualisierung kleiner loser Objekte mit Hilfe einer Vorrichtung (1) nach einem der Ansprüche 1 bis 10, das die folgenden Schritte beinhaltet:
- Ablegen der losen Objekte (3) mit einer Größe im Millimeterbereich auf der Platte (15),
- Versetzen der Platte (15) in Drehung in einer vordefinierten Richtung, um eine Zentrifugalkraft auf die Objekte (3) auszuüben, mit dem Ziel, sie in Richtung des umlaufenden Rands zu führen, und Überlagern dieser Drehbewegung mit Hin- und Herbewegungen, die aus Phasen bestehen, die die Drehung der Platte (15) beschleunigen (104) und verlangsamen (106), um die Haftung der Objekte an der Aufnahmeplatte zu verringern und ihre kontrollierte Bewegung in Richtung des umlaufenden Rands (17) zu erleichtern,
- Stoppen der Bewegung der Aufnahmeplatte (15),
- Detektieren der Position der Objekte (3) mit Hilfe einer Kamera (33),
- Führen der Objekte (3) unter die Greifeinheit, indem die Platte (15) gedreht wird,
- Greifen der Objekte (3) mit Hilfe der robotisierten Greifeinheit (31).

13. Verfahren zur Individualisierung loser Objekte nach Anspruch 12, **dadurch gekennzeichnet, dass** eine Drehgeschwindigkeit auf die Aufnahmeplatte angewandt wird, sodass die Zentrifugalkraft auf ein Objekt (3) kleiner als die statische Reibungskraft ist.

14. Verfahren zur Individualisierung loser Objekte nach Anspruch 13, **dadurch gekennzeichnet, dass** eine Drehgeschwindigkeit auf die Aufnahmeplatte (15) angewandt wird, sodass die Zentrifugalkraft auf ein Objekt größer als die kinetische Reibungskraft ist.

15. Verfahren zur Individualisierung loser Objekte nach einem der Ansprüche 12 bis 14, **dadurch gekennzeichnet, dass** die überlagerten Hin- und Herbewegungen derart sind, dass sich die Aufnahmeplatte (15) zumindest am Ende der Verlangsamungsphase in der Richtung bewegt, die der vordefinierten Richtung der Drehbewegung entgegengesetzt ist.

## Claims

1. Device (1) for individualizing small loose objects (3), in particular of parallelepiped shape, comprising:
- a plate (15) for receiving loose objects (3), the plate (15) comprising a peripheral retaining rim (17) and a receiving surface (19) that is higher at the rim than towards the center (21) of the plate (15), the receiving surface (19) sloping from the peripheral rim (17) towards the center (21) of the plate (15),
- a drive motor (29) for rotating the receiving plate (15) about a rotational axis of it,
- a robotic gripping unit (31) for gripping the objects (3),
- a control unit (30) controlling the drive motor (29), that is configured to send a power supply signal to the drive motor (29) resulting from the overlaying of a rotation control signal for rotating the plate (15) in a predefined direction in order to apply a centrifugal force to the objects (3) with the aim of conveying them towards the peripheral rim, and a control signal for alternating movements consisting of phases accelerating (104) and decelerating (106) the rotation of the plate (15) in order to reduce the adhesion of the objects (3) to the receiving plate (15) and to facilitate their controlled movement towards the peripheral rim (17).

2. Device according to Claim 1, **characterized in that** the overlaid control of alternating movements is such that the receiving plate (17) turns at least at the end of the deceleration phase in the direction opposite the predefined direction of the rotation movement.

3. Device according to Claim 1 or 2, **characterized in that** the power supply signal sent to the drive motor (29) to drive the plate in rotation in a predefined direction drives the receiving plate (15) at a speed such that the centrifugal force applied to an object near the exterior rim is less than the static force of adhesion of the object (3) to the receiving plate (15).

4. Device according to any one of Claims 1 to 3, **characterized in that** the receiving plate (15) has a smooth receiving surface (19).

5. Device according to any one of Claims 1 to 3, **characterized in that** the receiving plate (15) has a receiving surface (19) having a structure (23) for orienting the objects (3).

6. Device according to Claim 5, **characterized in that** the orienting structure (23) of the receiving surface (19) comprises radial ribs (39, 39A, 39B).

7. Device according to Claim 6, **characterized in that** the radial ribs (39) all have the same crest height profile.

8. Device according to Claim 6, **characterized in that** the receiving surface has regular main radial ribs (39A) and secondary radial ribs (39B) between two main radial ribs (39A), the main radial ribs (39A) having at the level of the rim (17) a crest height greater than the secondary radial ribs (39B).

9. Device according to Claim 8, **characterized in that** two secondary radial ribs (39B) lie between two main radial ribs (39A).

10. Device according to any one of Claims 6 to 9, **characterized in that** the ribs (39, 39A, 39B) have a triangular profile in cross section.

11. Installation for feeding a machine with small objects, **characterized in that** it comprises a device (1) according to any one of Claims 1 to 10.

12. Method for individualizing small loose objects by means of a device (1) according to any one of Claims 1 to 10, comprising the following steps:
- the millimeter size objects (3) are deposited loose on the plate (15),
- the plate (15) is rotated in a predefined direction in order to apply a centrifugal force to the objects (3) with the aim of conveying them towards the peripheral rim and alternating movements are overlaid on this rotation movement consisting of phases accelerating (104) and decelerating (106) the rotation of the plate (15) in order to reduce the adhesion of the objects to the receiving plate and to facilitate their controlled movement towards the peripheral rim (17),
- the movement of the receiving plate (15) is stopped,
- the position of the objects (3) is determined with the aid of a video camera (33),
- the objects (3) are fed under the gripping unit by causing the plate (15) to turn,
- the objects (3) are grasped by means of the robotic gripping unit (31).

13. Method according to Claim 12 of individualizing loose objects, **characterized in that** a rotation speed is imparted to the receiving plate so that the centrifugal force on an object (3) is less than the static friction force.

14. Method according to Claim 13 of individualizing loose objects, **characterized in that** a rotation speed is imparted to the receiving plate (15) so that the centrifugal force on an object is greater than the kinetic friction force.

15. Method according to any one of Claims 12 to 14 of individualizing loose objects, **characterized in that** the overlaid alternating movements are such that the receiving plate (15) turns at least at the end of the deceleration phase in the direction opposite the predefined direction of the rotation movement.
